# EUROPEAN PATENT APPLICATION

(11) **EP 4 697 568 A1**
(43) Date of publication of application: **18.02.2026**
(21) Application number: 24215837.6
(22) Date of filing: 27.11.2024
(51) Int. Cl.: H02K 5/22, H02K 11/225, H02K 11/25

(54) **STATOR STRUCTURE**

(30) Priority: 16.08.2024 CN 202411125907
(71) Applicant: Delta Electronics, Inc., Taoyuan City 333 (TW)
(72) Inventor: SU, Yu-Lin, 333 Taoyuan City (TW); TSAI, Shian-Min, 333 Taoyuan City (TW)
(74) Representative: Porta & Consulenti Associati S.p.A.

(57) **Abstract**

A stator structure (100) includes three-phase terminals (134), a plastic injection-molded covering member (135), a terminal bracket (131), three-phase busbars (151) and a floating bracket (133). The covering member (135) covers the three-phase terminals (134). The terminal bracket (131) connects the covering member (135). The three-phase busbars (151) are connected to the three-phase terminals (134) respectively, and are installed in three separated grooves (137) of the terminal bracket (131). The floating bracket (133) is installed on the terminal bracket (131) and used to accommodate at least one electrical connection socket (142, 144). Each of the three-phase busbars (151) includes a flexible material portion (151d). The electrical connection socket (142, 144) is restricted by the floating bracket (133) to float within a predetermined geometric range.

## Description

### BACKGROUND

### Field of Invention

The present disclosure relates to a motor stator and its three-phase terminal bracket structure.

### Description of Related Art

The three-phase terminals of conventional motors must be connected to the motor copper wire windings. Welding is often used to connect these two. However, when the motor is installed on an electric vehicle, the motor axis is usually parallel to the wheel axis. This arrangement causes the three-phase terminals to have a downward gravity. When external forces (such as motor vibrations) are applied, the external forces applied on the three-phase terminals will be supported by the soldering joints at the soldering interface. However, the structural strength of the soldering joints is relatively poor, and failure risks (such as fatigue and breakage) are likely to occur after the stress is applied.

### SUMMARY

The present disclosure proposes a motor stator structure for overcoming or alleviating the problems of the prior art.

In one or more embodiments, a stator structure includes three-phase terminals; a plastic injection-molded covering member enclosing the three-phase terminals; a plastic injection-molded terminal bracket connected to the covering member; three-phase busbars connected to the three-phase terminals respectively and installed in three separated grooves of the terminal bracket; a floating bracket installed on the terminal bracket and configured to accommodate at least one electrical connection socket, wherein each of the three-phase busbars includes a flexible material portion, wherein the at least one electrical connection socket is restricted by the floating bracket to float within a predetermined geometric range.

In one or more embodiments, the covering member and the terminal bracket are of a unitary structure.

In one or more embodiments, the flexible material portion comprises stacked copper strips or braided copper wires.

In one or more embodiments, the predetermined geometric range includes two mutually perpendicular axes, and at least one of the two mutually perpendicular axes is different from an installation direction of the at least one electrical connection socket.

In one or more embodiments, the at least one electrical connection socket includes a resolver connection socket or a temperature sensor connection socket.

In one or more embodiments, each of the three separated grooves of the terminal bracket has an inner wall having a busbar fastener.

In one or more embodiments, the busbar fastener includes a convex part and a concave part configured to restrict two mutually perpendicular directions of a corresponding one of the three-phase busbars.

In one or more embodiments, a distance between the convex part and a bottom wall of the concave part is equal to or greater than a thickness of the corresponding one of the three-phase busbars to restrict a movement of the corresponding one of the three-phase busbars along one of the two mutually perpendicular directions.

In one or more embodiments, the concave part of the busbar fastener is engaged with a protruding member of each of the three-phase busbars to restrict the three-phase busbars in a movement of the corresponding one of the three-phase busbars along the other one of the two mutually perpendicular directions.

In one or more embodiments, the terminal bracket further includes a wire slot for fixing at least one wire of the at least one electrical connection socket.

The motor stator structure disclosed herein provides good support and insulation wrapping for three-phase terminals and three-phase busbars through its covering member and terminal bracket to enhance the overall structural strength. The three-phase terminals and three-phase busbars are subject to external forces and supported by the stator terminals and terminal bracket, so the external force on the soldering joints is reduced and the risk of failure is also reduced. The terminal bracket is designed as a set of a floating bracket to support at least one electrical connection socket. The geometric features of the floating bracket can limit the position of the electrical connection socket, allow the electrical connection socket to float within a design range without exceeding the limitations of the geometric features. Only through specific assembly procedures can the electrical connector be installed into the floating bracket. Therefore, when the electrical connection socket is affected by external forces such as vibration, it will not fall out of the floating bracket. The floating bracket can accept a certain degree of positional floating. When there is a positional deviation between the electrical connection socket and its counterpart, it can be automatically corrected so that these two can be assembled correctly.

It is to be understood that both the foregoing general description and the following detailed description are by examples, and are intended to provide further explanation of the invention as claimed.

### BRIEF DESCRIPTION OF THE DRAWINGS

The invention can be more fully understood by reading the following detailed description of the embodiment, with reference made to the accompanying drawings as follows:
Fig. 1 illustrates a perspective view of a motor stator structure according to some embodiments of the present disclosure;
Fig. 2 illustrates a stator endcap and three-phase terminals of the motor stator structure in Fig. 1;
Fig. 3 illustrates associated structures of three-phase terminals of the motor stator structure in Fig. 1;
Fig. 4 illustrates an enlarged perspective view of associated structures of three-phase terminals of the motor stator structure according to some embodiments of the present disclosure;
Figs. 5a and 5b are sequential schematic diagrams showing the electrical connection socket installed on a floating bracket of the terminal bracket according to some embodiments of the present disclosure;
Fig. 6a illustrates a perspective view of a three-phase terminal enclosed by a plastic injection-molded covering member according to some embodiments of the present disclosure;
Fig. 6b illustrates a perspective view of the three-phase terminal after removing the covering member in Fig. 6a; and
Fig. 7 illustrates a perspective view of three separated grooves of the terminal bracket and three-phase busbars according to some embodiments of the present disclosure.

### DETAILED DESCRIPTION

Reference will now be made in detail to the present embodiments, examples of which are illustrated in the accompanying drawings. Wherever possible, the same reference numbers are used in the drawings and the description to refer to the same or like parts.

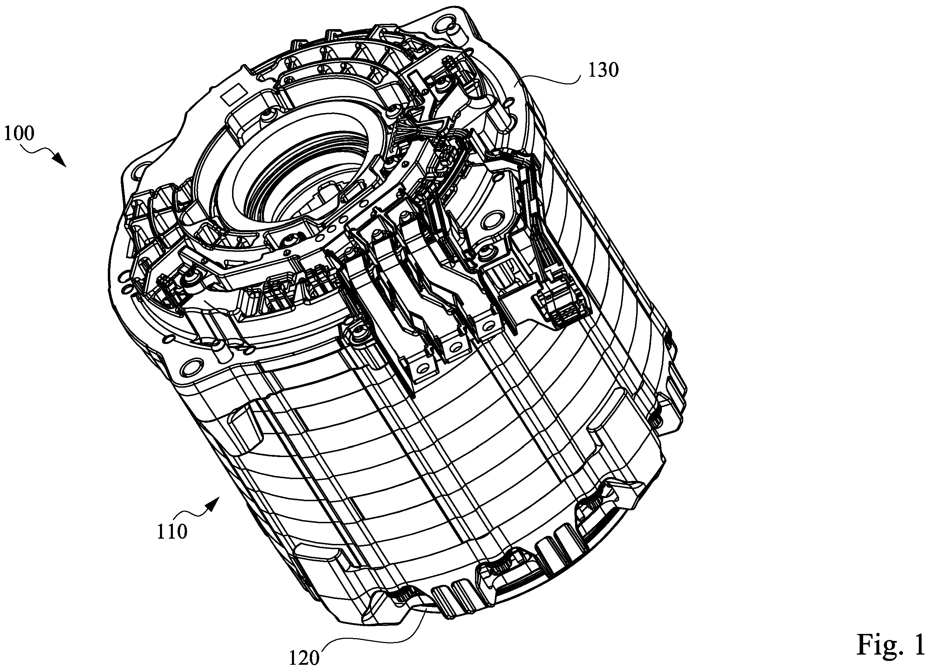

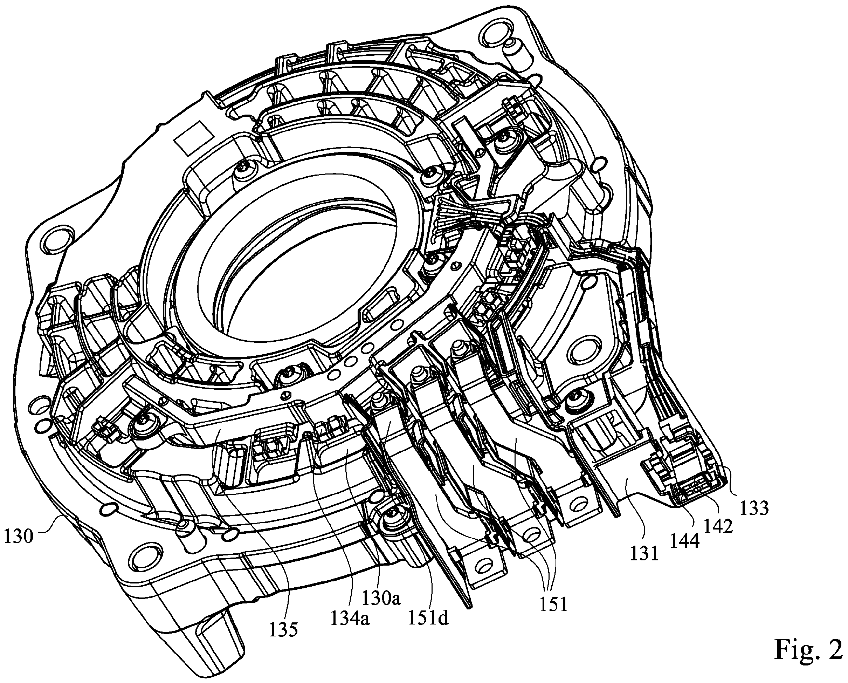

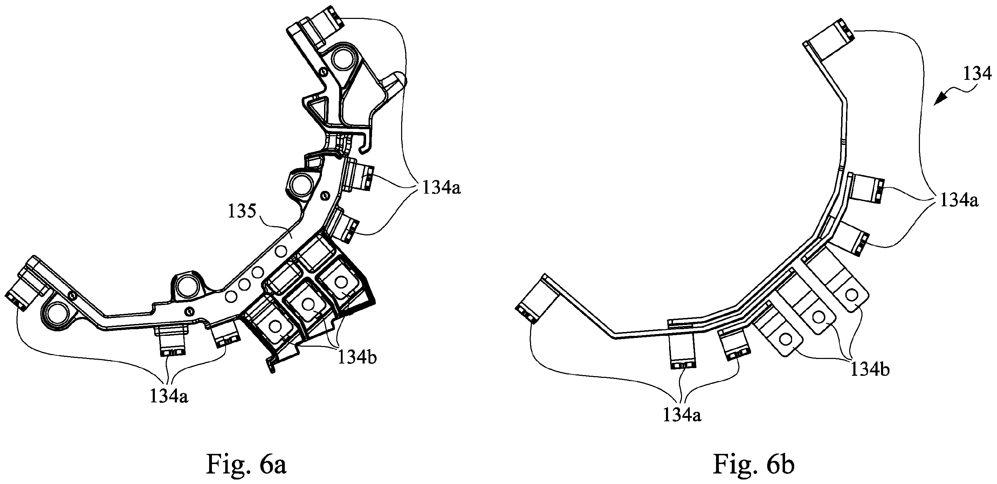

Reference is made to Figs. 1 and 2, a motor stator structure 100 includes a stator mainbody 110, a stator endcap 120 and a stator endcap 130. The stator endcap 120 is assembled to a first axial side of the stator mainbody 110 and adjacent to a stator winding of the stator mainbody 110 on a first side, and the stator endcap 130 is assembled to a second axial side of the stator mainbody 110 and adjacent to a stator winding of the stator mainbody 110 on a second side. The motor stator structure 100 also includes three-phase terminals 134 (referring to Fig. 6b), a plastic injection-molded covering member 135, a plastic injection-molded terminal bracket 131 and three-phase busbars 151, etc., which are secured to the stator endcap 130. The covering member 135 are processed into desired shapes to enclose or cover most portions of the three-phase terminals 134, so that the stator windings can be welded to the three-phase terminals 134 through the through holes 130a of the stator endcap 130. The terminal bracket 131 is made by a plastic injection-molding and connected to the covering member 135. In some embodiments of the present disclosure, the terminal bracket 131 and the covering member 135 are integrally formed plastic injection molded parts of a unitary structure. In other embodiments of the present disclosure, the terminal bracket 131 and the covering member 135 are plastic injection molded parts formed and assembled separately. The three-phase busbars 151 also form electrical connections and mechanical connections to the exposed parts of the three-phase terminals 134 by welding or other methods.

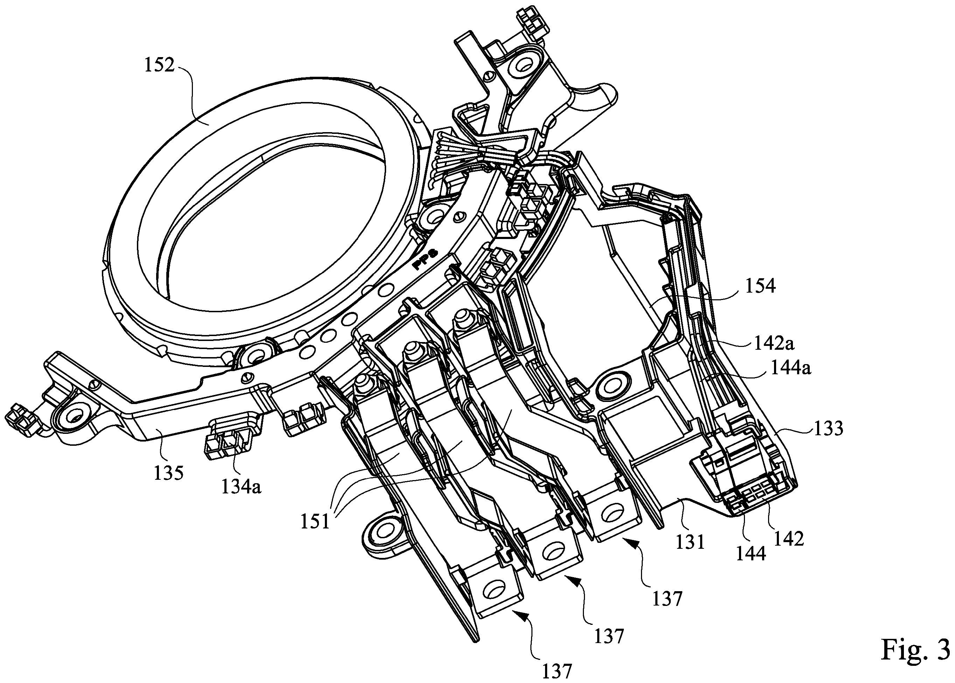

Reference is made to Figs. 3, 4, 6a, and 6b, after the three-phase terminals 134 are covered by the plastic injection-molded covering member 135, only connection ends 134a and connection ends 134b are exposed. The connection ends 134a are used for electrical connection (through welding) and mechanical connection to the external terminal of the stator winding. The connection ends 134b are used for electrical connection and mechanical connection to the three-phase busbars 151. One end of each three-phase busbar 151 is fixed to an exposed connecting end 134b of a correponding three-phase terminal 134 to achieve electrical connection. The remaining parts of the three-phase busbars 151 are accommodated in three separate grooves 137 of the terminal bracket 131 respectively. The terminal bracket 131 also includes a floating bracket 133 for accommodating at least one electrical connection socket. In some embodiments of the present disclosure, the floating bracket 133 is used to accommodate a resolver connection socket 142 and a temperature sensor connection socket 144. The resolver connection socket 142 is electrically connected to an angle resolver 152 via a wire 142a. The angle resolver 152 is used to detect the rotation angle of the rotor relative to the stator. The temperature sensor connection socket 144 is electrically connected to a temperature sensor 154 via a wire 144a. The temperature sensor 154 is inserted into the stator mainbody 110, e.g., near the stator winding, to detect the temperature of the motor stator during operation. In some embodiments of the present disclosure, the terminal bracket 131 also includes a wire slot 132 for fixing the wire 142a of the resolver connection socket 142 and the wire 144a of the temperature sensor connection socket 144. Please refer to Figs. 6a and 6b. In some embodiments of the present disclosure, the three-phase terminals 134 are arranged in a semi-circular arc shape, and the covering member 135 is also processed by a plastic injection-molding into a semi-circular arc shape to cover the three-phase terminals 134.

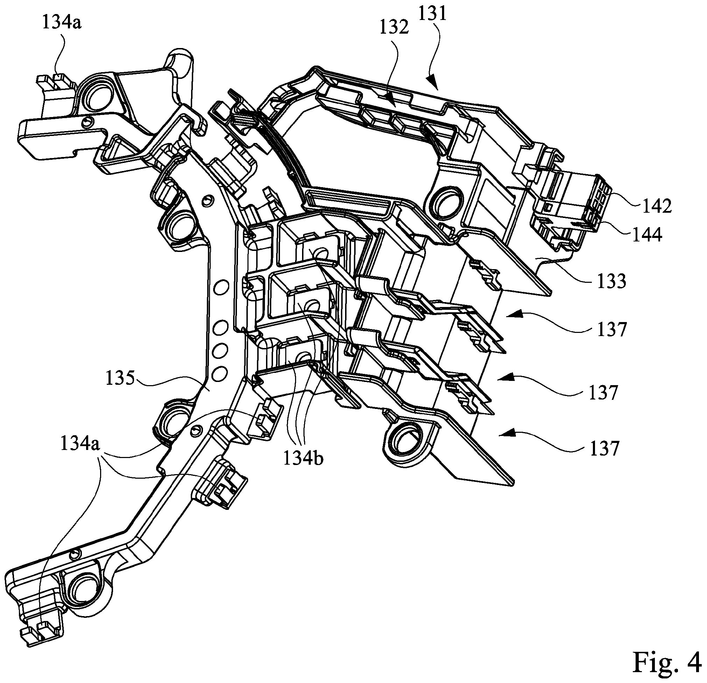

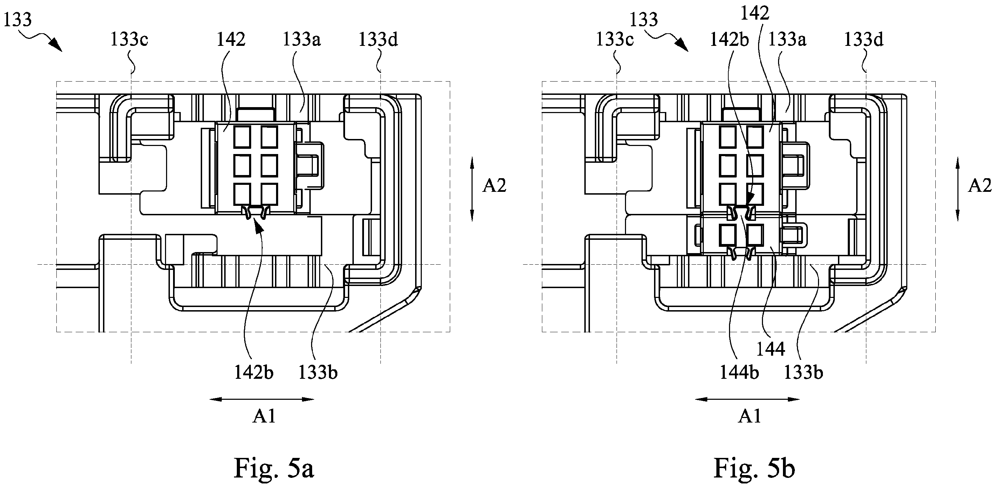

Reference is made to Figs. 5a and 5b, the floating bracket 133 is part of the terminal bracket 131 and is arranged side by side with the three separate grooves 137 (please refer to Fig. 4). The floating bracket 133 is used to accommodate and restrict at least one electrical connection socket to float within a predetermined geometric range. In some embodiments of the present disclosure, the predetermined geometric range includes two mutually perpendicular axes (A1, A2), and at least one of the two mutually perpendicular axes (A1, A2) is different from an installation direction of the electrical connection socket. Along an axis A1, the floating bracket 133 is used to limit the floating of the electrical connection socket between the boundary 133c and the boundary 133d. Along the axis A2, the floating bracket 133 is used to limit the floating of the electrical connection socket between the boundary 133a and the boundary 133b. In some embodiments of the present disclosure, the floating bracket 133 is used to accommodate a resolver connection socket 142 and a temperature sensor connection socket 144. Therefore, the resolver connection socket 142 and the temperature sensor connection socket 144 need to be installed into the floating bracket 133 in a predetermined order. In Figs. 5a and 5b, the resolver connection socket 142 can be installed into the floating bracket 133 along the axis A2 first, and the resolver connection socket 142 is pushed toward to the boundary 133a to facilitate the temperature sensor connection socket 144 to be installed into floating bracket 133 along the axis A2. In some embodiments of the present disclosure, the resolver connection socket 142 has a female fastener 142b, and the temperature sensor connection socket 144 has a male fastener 144b. When these two connection sockets are sequentially installed into the floating bracket 133, the male fastener 144b engages with the female fastener 142b so that the resolver connection socket 142 and the temperature sensor connection socket 144 can be fixed to each other and can slide together between the boundaries (133a and 133b, 133c and 133d) in the floating bracket 133. In other embodiments of the present disclosure, the positions of the male fasteners and the female fasteners of the resolver connection socket 142 and the temperature sensor connection socket 144 can be interchanged, that is, the resolver connection socket 142 has a male fastener, and the temperature sensor connection socket 144 has a female fastener. When these two connection sockets are installed into the floating bracket 133, the male fastener and the female fastener can also engage to secure the two connection sockets. In some embodiments of the present disclosure, the resolver connection socket 142 and the temperature sensor connection socket 144 can be replaced with different types of sensor sockets or electrical connection sockets, but being not limited thereto.

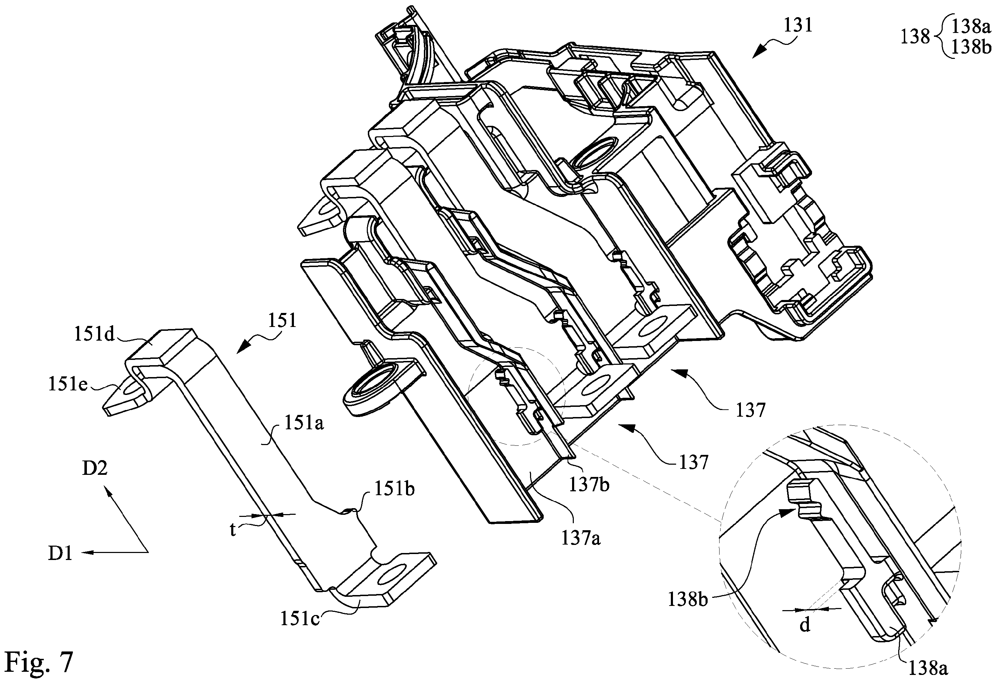

Reference is made to Fig. 7, each groove 137 is used to accommodate one of the three-phase busbars 151 so that the three-phase busbars 151 can be insulated from each other. In some embodiments of the present disclosure, each inner sidewalls 137b of the three grooves 137 of the terminal bracket 131 has a busbar fastener 138. Each busbar fastener 138 includes a convex part 138a and a concave part 138b. The convex part 138a and the concave part 138b are used to limit two mutually perpendicular directions (D1, D2) of a corresponding one of the three-phase busbars 151 respectively. In some embodiments of the present disclosure, a distance (d) between the convex part 138a of the busbar fastener 138 and a bottom wall 137a of the grooves 137 is equal to or slightly greater than a thickness (t) of the busbar 151, thereby limiting the movement of the busbar 151 along the direction D1. The concave part 138b of the busbar fastener 138 engages a protruding member 151b of the busbar 151, thereby restricting the movement of the busbar 151 in the direction D2. The busbar fastener 138 is used to maintain the the three-phase busbars 151 in proper positions before the motor stator structure enters an automobile assembly line to avoid positional deviation due to transportation or vibration, thus facilitating the motor stator structure into an automated automobile assembly line and preventing the three-phase busbars 151 from being damaged. In some embodiments of the present disclosure, the busbar 151 includes an elongated portion 151a, a flexible material portion 151d, a lower locking portion 151c and an upper locking portion 151e. The flexible material portion 151d is connected between the elongated part 151a and the upper locking portion 151e. The protruding member 151b of the busbar 151 is located at a side edge of the elongated portion 151a. The flexible material portion 151d may be a plurality of stacked copper strips or braided copper wires. In other embodiments of the present disclosure, the elongated portion 151a of the busbar 151 can also be a flexible material portion as a whole. In other words, the upper locking portion 151e and the lower locking portion 151c are all flexible material portions. The flexible material portion 151d is used to compensate for the positional deviation between the three-phase busbars and the three-phase terminals, so that these two can be well connected. After the upper locking portion 151e and the lower locking portion 151c are locked, the structural stress and reaction force generated by the flexible material portion 151d are relatively small, and the risk of structural failure can be low.

The motor stator structure disclosed herein provides good support and insulation wrapping for three-phase terminals and three-phase busbars through its covering member and terminal bracket to enhance the overall structural strength. The three-phase terminals and three-phase busbars are subject to external forces and supported by the stator terminals and terminal bracket, so the external force on the soldering joints is reduced and the risk of failure is also reduced. The terminal bracket is designed as a set of a floating bracket to support at least one electrical connection socket. The geometric features of the floating bracket can limit the position of the electrical connection socket, allow the electrical connection socket to float within a design range without exceeding the limitations of the geometric features. Only through specific assembly procedures can the electrical connector be installed into the floating bracket. Therefore, when the electrical connection socket is affected by external forces such as vibration, it will not fall out of the floating bracket. The floating bracket can accept a certain degree of positional floating. When there is a positional deviation between the electrical connection socket and its counterpart, it can be automatically corrected so that these two can be assembled correctly.

## Claims

1. A stator structure (100) comprising:
three-phase terminals (134);
a plastic injection-molded covering member (135) enclosing the three-phase terminals (134);
a plastic injection-molded terminal bracket (131) connected to the covering member (135);
three-phase busbars (151) connected to the three-phase terminals (134) respectively and installed in three separated grooves (137) of the terminal bracket (131); and
a floating bracket (133) installed on the terminal bracket (131) and configured to accommodate at least one electrical connection socket (142, 144),
wherein each of the three-phase busbars (151) includes a flexible material portion (151d), and
wherein the at least one electrical connection socket (142, 144) is restricted by the floating bracket (133) to float within a predetermined geometric range.

2. The stator structure (100) of claim 1, wherein the covering member (135) and the terminal bracket (131) are of a unitary structure.

3. The stator structure (100) of claim 1, wherein the flexible material portion (151d) comprises stacked copper strips or braided copper wires.

4. The stator structure (100) of claim 1, wherein the predetermined geometric range includes two mutually perpendicular axes (A1, A2), and at least one of the two mutually perpendicular axes (A1, A2) is different from an installation direction of the at least one electrical connection socket (142, 144).

5. The stator structure (100) of claim 1, wherein the at least one electrical connection socket (142, 144) includes a resolver connection socket (142) or a temperature sensor connection socket (144).

6. The stator structure (100) of claim 1, wherein each of the three separated grooves (137) of the terminal bracket (131) has an inner sidewall (137b) having a busbar fastener (138).

7. The stator structure (100) of claim 6, wherein the busbar fastener (138) includes a convex part (138a) and a concave part (138b) configured to restrict two mutually perpendicular directions (D1, D2) of a corresponding one of the three-phase busbars (151).

8. The stator structure (100) of claim 7, wherein a distance (d) between the convex part (138a) and a bottom wall (137a) of the three separated grooves (137) is equal to or greater than a thickness (t) of the corresponding one of the three-phase busbars (151) to restrict a movement of the corresponding one of the three-phase busbars (151) along one of the two mutually perpendicular directions (D1, D2).

9. The stator structure (100) of claim 8, wherein the concave part (138b) of the busbar fastener (138) is engaged with a protruding member (151b) of each of the three-phase busbars (151) to restrict the three-phase busbars (151) in a movement of the corresponding one of the three-phase busbars (151) along the other one of the two mutually perpendicular directions (D1, D2).

10. The stator structure (100) of claim 1, wherein the terminal bracket (131) further includes a wire slot (132) for fixing at least one wire (142a, 144a) of the at least one electrical connection socket (142, 144).

## Amended claims

### Amended claims in accordance with Rule 137(2) EPC.

1. A stator structure (100) comprising:
three-phase terminals (134);
a plastic injection-molded covering member (135) enclosing the three-phase terminals (134);
a plastic injection-molded terminal bracket (131) connected to the covering member (135);
three-phase busbars (151) connected to the three-phase terminals (134) respectively and installed in three separated grooves (137) of the terminal bracket (131); and
a floating bracket (133) installed on the terminal bracket (131) and configured to accommodate at least one electrical connection socket (142, 144),
wherein the at least one electrical connection socket (142, 144) is restricted by the floating bracket (133) to float within a predetermined geometric range;
**characterized in that** each of the three-phase busbars (151) includes a flexible material portion (151d) and **in that** each of the three separated grooves (137) of the terminal bracket (131) has an inner sidewall (137b) having a busbar fastener (138), the busbar fastener (138) including a convex part (138a) and a concave part (138b) configured to restrict two mutually perpendicular directions (D1, D2) of a corresponding one of the three-phase busbars (151).

2. The stator structure (100) of claim 1, wherein the covering member (135) and the terminal bracket (131) are of a unitary structure.

3. The stator structure (100) of claim 1, wherein the flexible material portion (151d) comprises stacked copper strips or braided copper wires.

4. The stator structure (100) of claim 1, wherein the predetermined geometric range includes two mutually perpendicular axes (A1, A2), and at least one of the two mutually perpendicular axes (A1, A2) is different from an installation direction of the at least one electrical connection socket (142, 144).

5. The stator structure (100) of claim 1, wherein the at least one electrical connection socket (142, 144) includes a resolver connection socket (142) or a temperature sensor connection socket (144).

6. The stator structure (100) of claim 1, wherein a distance (d) between the convex part (138a) and a bottom wall (137a) of the three separated grooves (137) is equal to or greater than a thickness (t) of the corresponding one of the three-phase busbars (151) to restrict a movement of the corresponding one of the three-phase busbars (151) along one of the two mutually perpendicular directions (D1, D2).

7. The stator structure (100) of claim 6, wherein the concave part (138b) of the busbar fastener (138) is engaged with a protruding member (151b) of each of the three-phase busbars (151) to restrict the movement of the three-phase busbars (151) along the other one of the two mutually perpendicular directions (D1, D2).

8. The stator structure (100) of claim 1, wherein the terminal bracket (131) further includes a wire slot (132) for fixing at least one wire (142a, 144a) of the at least one electrical connection socket (142, 144).
